# EUROPÄISCHE PATENTSCHRIFT

(11) **EP 3 510 135 B1**
(45) Veröffentlichungstag und Bekanntmachung des Hinweises auf die Patenterteilung: **03.05.2023**
(21) Anmeldenummer: 17762120.8
(22) Anmeldetag: 07.09.2017
(51) Int. Cl.: C11D 17/00, C11D 11/00, C11D 3/37

(54) **FILAMENT ZUR HERSTELLUNG EINES WASCH- ODER REINIGUNGSMITTELPRODUKTS, WASCH- ODER REINIGUNGSMITTELPRODUKT, VERFAHREN ZUR HERSTELLUNG VON FILAMENT UND WASCH- ODER REINIGUNGSMITTELPRODUKT SOWIE DRUCKVORLAGE FÜR DAS WASCH- ODER REINIGUNGSMITTELPRODUKT**
FILAMENT FOR PRODUCING A WASHING OR CLEANING AGENT PRODUCT, WASHING OR CLEANING AGENT PRODUCT, METHOD FOR PRODUCING FILAMENTS AND WASHING OR CLEANING AGENT PRODUCT AND PRINTING TEMPLATE FOR THE WASHING OR CLEANING AGENT PRODUCT
FILAMENT SERVANT À LA FABRICATION D'UN PRODUIT DÉTERGENT OU NETTOYANT, PRODUIT DÉTERGENT OU NETTOYANT, PROCÉDÉ DE FABRICATION D'UN FILAMENT ET D'UN PRODUIT DÉTERGENT OU NETTOYANT AINSI QUE MAQUETTE POUR LE PRODUIT DÉTERGENT OU NETTOYANT

(30) Priorität: 12.09.2016 DE 102016217303
(43) Veröffentlichungstag der Anmeldung: 17.07.2019
(73) Patentinhaber: Henkel AG & Co. KGaA, 40589 Düsseldorf (DE)
(72) Erfinder: HEBERLEIN, Walter, 1060 Wien (AT); SUNDER, Matthias, 40593 Düsseldorf (DE); GERHARDS, Katja, 40547 Düsseldorf (DE)
(86) Internationale Anmeldenummer: PCT/EP2017/072406
(87) Internationale Veröffentlichungsnummer: WO 2018/046569

(56) Entgegenhaltungen:
- EP-A1- 0 728 804
- US-A1- 2015 190 967
- US-A1- 2015 291 921

## Beschreibung

### Gebiet

Die Erfindung betrifft ein Filament zum Drucken eines Wasch-oder Reinigungsmittelprodukts, ein Verfahren zur Herstellung eines solchen Filaments, ein Verfahren zur Herstellung eines Wasch-oder Reinigungsmittelprodukts mit einem solchen Filament, eine Druckvorlage zum Drucken eines Wasch- oder Reinigungsmittelprodukts unter Verwendung eines Filaments und ein Wasch- oder Reinigungsmittelprodukt hergestellt unter Verwendung eines solchen Filaments, eines solchen Verfahrens und/oder einer solchen Druckvorlage.

### Hintergrund

Es sind sehr viele unterschiedliche Wasch- oder Reinigungsmittelprodukte am Markt verfügbar. Viele solcher Waschmittelprodukte sind für das Waschen sehr unterschiedlicher Textilien mit sehr unterschiedlichen Verunreinigungen geeignet. Daneben gibt es aber auch eine ganze Reihe von speziellen Waschmittelprodukten, die insbesondere für spezielle Textilien, wie Wolle, Sporttextilien oder schwarze Textilien vorgesehen sind. Zudem sind unterschiedliche Zusätze wie Weichspüler oder Duftstoffe bekannt. Alle diese Waschmittelprodukte sind zudem als Pulver und als flüssiges Waschmittel verfügbar. Ergänzend kann für nahezu jede erdenkliche Verschmutzung ein spezielles Fleckenmittel erworben werden. Damit können sowohl im gewerblichen Umfeld als auch im privaten Umfeld sehr unterschiedliche Textilen mit sehr unterschiedlichen Verschmutzungen in geeigneter Weise gewaschen werden, auch wenn in einigen Fällen eine chemische Reinigung erforderlich sein wird. Flüssige und feste Reinigungsmittel können ebenfalls für spezielle Anwendungen, z.B. für die Geschirrreinigung hergerichtet sein. Auch in den Reinigungsmitteln kommen unterschiedliche Zusatzstoffe zum Einsatz.

Waschmittelprodukte der eingangs genannten Art werden insbesondere als Waschmittel in einem maschinellen Waschverfahren zur Reinigung von Textilien eingesetzt. Grundsätzlich kommt jedoch auch die maschinelle oder händische Reinigung anderer Objekte als Textilien in Frage.

Waschverfahren, also insbesondere Verfahren zur Reinigung von Textilien zeichnen sich im allgemeinen dadurch aus, dass in einem oder mehreren Verfahrensschritten reinigungsaktive Substanzen auf das Reinigungsgut aufgebracht und nach der Einwirkzeit abgewaschen werden, oder dass das Reinigungsgut in sonstiger Weise mit einem Waschmittelprodukt oder wenigstens einer Waschmittelkomponente, etwa in wässriger Lösung behandelt wird. In solchen Waschverfahren werden in verschiedenen Ausführungsformen der Erfindung Temperaturen von bis zu 95 °C oder weniger, 90 °C oder weniger, 60°C oder weniger, 50°C oder weniger, 40 °C oder weniger, 30°C oder weniger oder 20°C oder weniger, eingesetzt. Diese Temperaturangaben beziehen sich auf die in den Waschschritten eingesetzten Temperaturen. Diese Ausführungen gelten ebenfalls für Reinigungsmittel, insbesondere Reinigungsmittel für automatische Geschirrspülmaschinen.

Um für die anstehenden Wasch- oder Reinigungsaufgaben, jeweils die optimalen Wasch- oder Reinigungsmittelprodukte vorrätig zu haben, ist eine Bevorratung von teilweise sehr vielen verschiedenen Wasch- oder Reinigungsmittelprodukten notwendig. Da die Produkte teilweise in größeren Einheiten angeboten werden, ist dies nicht nur kostenintensiv, sondern muss für die Lagerung der Produkte zudem viel Platz bereitgestellt werden. Aber auch dann kann nicht ausgeschlossen werden, dass eine bestimmte Art von Wäsche anfällt, für deren Reinigung nicht das optimale Waschprodukt bzw. nicht die optimale Kombination von Waschprodukten zur Verfügung steht. Es muss dann erst weiteres Waschprodukt beschafft oder eine nicht optimale Behandlung der Wäsche in Kauf genommen werden.

Neben den Wasch- oder Reinigungsmittelprodukten sind unterschiedliche Verfahren zum Herstellen von Produkten im Wege des 3D-Drucks bekannt. Beim 3D-Druck werden dreidimensionale Werkstücke schrittweise, insbesondere schichtweise, aufgebaut. Der Aufbau erfolgt computergesteuert aus einem oder mehreren flüssigen oder festen Werkstoffen nach vorgegebenen Maßen und Formen. Die Maße und Formen, letztlich die dreidimensionale Gestalt des Produkts, wird über eine Druckformlage vorgegeben. Die Druckformlage liegt als Datei eines geeigneten Dateiformats vor, in der Anweisungen für den 3D-Drucker enthalten sind, wo das zu verarbeitende Material aufgedruckt, bzw. vorgesehen sein soll, etwa im Sinne von x-, y- und z-Koordinaten. Die Druckvorlage kann direkt aus einem CAD-System (Computer Aided Design) generiert werden oder eine gängige CAD-Datei sein. 3D-Drucker sind eine Teilklasse der additiven, d.h. anhäufenden, aufbauenden Fertigungseinrichtungen. Der 3D-Druck wird daher auch als additives Fertigungsverfahren bezeichnet.

Um Produkte im 3D-Druck aus Kunststoffen, wie etwa Acrylnitril-Butadien-Styrol (ABS), Polymilchsäure (PLA), Nylon oder Kombinationen davon herzustellen, ist das sogenannte Fused Deposition Modeling (FDM)-Verfahren bekannt, das auch als Fused Filament Fabrication (FFF) bezeichnet werden kann. Die 3D-Drucker nutzen zum Drucken auf Spulen aufgewickelte Kunststoffdrähte bzw. Kunststofffäden (Filamente). Diese Filamente werden mit dem Extruder verbunden, der die Filamente kontinuierlich durch ein Heizelement fördert, in dem es zur Aufschmelzung des Filaments kommt. Das geschmolzene oder wenigstens erweichte Filament gelangt weiter zur Düse des Extruders, wo der Kunststoff austritt. Die Düse wird als der Druckkopf des 3D-Druckers bezeichnet, mit dem der geschmolzene oder zähflüssige Kunststoff auf einen Untergrund bzw. auf einen vorher gedruckten Teil des herzustellenden Produkts aufgetragen wird. Anschließend erstarrt der Kunststoff des Filaments, so dass auf die entsprechende Kunststoffschicht eine weitere Kunststoffschicht aufgedruckt werden kann, bis die endgültige Form des Produkts fertiggestellt ist. Die Summe der gedruckten Schichten bildet dann das Produkt bzw. das im Wege des 3D-Drucks erzeugte Objekt. Mittels UV-Strahlung härtbare Kunststoffe werden dagegen im Wege der Stereolithographie oder des Multi Jet Modeling hergestellt, während sich für pulverförmige Kunststoffe oder Metalle insbesondere das selektive Lasersintern, das selektive Laserschmelzen oder das selektives Elektronenstrahlschmelzen in Frage kommt.

Die Filamente für den 3D-Druck mit dem FDM-Verfahren werden typischerweise extrudiert. Dazu wird der Kunststoff als Granulat in einen Extruder gegeben, der den Kunststoff erweicht oder aufschmilzt und wenigstens im Wesentlichen kontinuierlichen als Strang aus einer Düse des Extruders herauspresst. Der Strang wird sodann bedarfsweise durch eine Öffnung definierten Durchmessers gezogen, um so den Durchmesser des Filaments exakt vorgeben zu können. Zudem wird das Filament durch ein Wasserbad gezogen oder mit Wasser beaufschlagt, um das Filament abzukühlen und zu erstarren. Anschließend wird das Filament aufgewickelt. Das Filament kann dabei durch Walzen oder das Aufwickeln des Filaments zu einem Coil vom Extruder abgezogen werden.

Der 3D-Druck wird insbesondere zur Herstellung von Prototypen, Kleinserien oder in hohem Maße individualisierten Produkten eingesetzt, da hier anders als bei vielen konventionellen Herstellungsmethoden, wie beispielsweise dem Spritzguss, nicht erst spezielle Werkzeuge hergestellt werden müssen. Die Herstellung der entsprechenden Werkzeuge ist nämlich oftmals sehr teuer und zeitintensiv.

Dokument US2015/291921 A1 beschreibt ein 3D-Drucksystem zur Herstellung von dreidimensionalen Objekten aus Seife. Dokument EP0728804 A1 beschreibt eine Zusammensetzung, die zur Herstellung von Toilettenrandblöcken geeignet ist, und ein Verfahren zu deren Herstellung. Dokument US2015/0190967 A1 beschreibt ein Objekt und ein Verfahren zur Reinigung von Druckköpfen eines 3D-Druckers.

Daher liegt der vorliegenden Erfindung die Aufgabe zugrunde, die Verfahren, das Waschprodukt, das Filament und die Druckvorlage jeweils der eingangs genannten Art derart auszugestalten und weiterzubilden, das weniger Waschprodukte bevorratet werden müssen, um umfangreichen Waschaufgaben in optimaler Weise gerecht werden zu können.

### Zusammenfassung einiger beispielhafter Ausführungsformen der Erfindung

Diese Aufgabe ist gemäß Anspruch 1 gelöst durch ein Filament zum Drucken eines Wasch- oder Reinigungsmittelprodukts, umfassend eine Filamentmatrix und wenigstens eine in der Filamentmatrix eingebundene Wasch- oder Reinigungsmittelkomponente, wobei die Filamentmatrix wenigstens im Wesentlichen durch wenigstens einen wasserlöslichen Kunststoff gebildet wird und wobei die wenigstens eine Wasch- oder Reinigungsmittelkomponente in der Filamentmatrix aufgenommen ist.

Ferner ist die Aufgabe gemäß Anspruch 6 gelöst durch ein Verfahren zur Herstellung eines Filaments nach einem der Ansprüche 1 bis 5, bei dem der wenigstens eine wasserlösliche Kunststoff und die wenigstens eine Wasch- oder Reinigungsmittelkomponente, insbesondere in Form von wenigstens einem Granulat, in einem Extruder erhitzt, gemeinsam in einem Strang als Extrudat aus wenigstens einer Düse des Extruders ausgestoßen und anschließend abgekühlt werden.

Zudem ist die genannte Aufgabe gemäß Anspruch 8 gelöst durch ein Verfahren zur Herstellung eines Wasch- oder Reinigungsmittelprodukts mit wenigstens einem Filaments nach einem der Ansprüche 1 bis 5, bei dem das wenigstens eine Filament als Werkstoff für die Herstellung eines Wasch- oder Reinigungsmittelprodukts in einem 3D-Drucker verwendet wird.

Im Übrigen ist die vorgenannte Aufgabe gelöst durch eine Druckvorlage zum Drucken eines Wasch- oder Reinigungsmittelprodukts unter Verwendung eines Filaments nach einem der Ansprüche 1 bis 5, umfassend Informationen betreffend das schrittweise Auftragen wenigstens eines Materials zu einem räumlichen Wasch- oder Reinigungsmittelprodukt.

Letztlich ist die eingangs genannte Aufgabe auch gemäß Anspruch 11 gelöst durch ein Wasch-oder Reinigungsmittelprodukt hergestellt unter Verwendung eines Filaments nach einem der Ansprüche 1 bis 5, und/oder eines Verfahrens nach Anspruch 8 bis 10.

Die Erfindung hat erkannt, dass es zweckdienlich ist, ein Wasch- oder Reinigungsmittelprodukt im Wege des 3D-Drucks herzustellen. Dies erlaubt die Herstellung von sehr individuellen und speziellen Wasch- oder Reinigungsmittelprodukten zu sehr geringen Kosten, da die Wasch- oder Reinigungsmittelprodukte in sehr kleinen Mengen hergestellt werden können. Zudem muss das Wasch- oder Reinigungsmittelprodukt nicht mehr in großen industriellen Anlagen hergestellt werden. Das Herstellen des Wasch- oder Reinigungsmittelprodukts kann vielmehr dezentral, also insbesondere am Ort der Verwendung oder nahe am Ort der Verwendung hergestellt werden. Dies erspart Transportkosten und auch die für den Transport zum Ort der Verwendung benötigte Zeit. Dabei kann das Wasch- oder Reinigungsmittelprodukt unmittelbar am Ort der Verwendung hergestellt werden. Dies ist insbesondere bei der gewerblichen Verwendung von Wasch- oder Reinigungsmittelprodukten zweckmäßig. Es kann aber auch zweckmäßig sein, wenn das Wasch-oder Reinigungsmittelprodukt vom privaten Endkonsument gedruckt und zum Waschen eingesetzt wird. Der 3D-Druck kann alternativ oder zusätzlich auch im Einzelhandel, etwa einer Drogerie, erfolgen. Anstatt ein Wasch- oder Reinigungsmittelprodukt aus dem Regel zu entnehmen, kann das Wasch- oder Reinigungsmittelprodukt bedarfsweise an einem 3D-Drucker des Geschäfts auf Anforderung des Kunden in der gewünschten Menge gedruckt werden. In diesem Zusammenhang ist es weiter vorteilhaft, dass der 3D-Druck des Wasch- oder Reinigungsmittelprodukts mit einem einfachen Verfahren, insbesondere dem Fused Deposition Modeling (FDM)-Verfahren erfolgen kann. Dieses ist nicht nur einfach und kostengünstig, sondern bedarf auch keines besonders kostenintensiven 3D-Druckers, so dass dieser ohne besonderes Know-how betrieben werden kann. Der 3D-Drucker kann daher beispielsweise von einer Privatperson, Verkaufspersonal oder einem Anwender des Wasch- oder Reinigungsmittelprodukts vor Ort oder an einem nahegelegenen Ort zum Drucken des Wasch- oder Reinigungsmittelprodukts genutzt werden.

Die wenigstens im Wesentlichen rückstandfreie Verwendung des im Wege des 3D-Drucks hergestellten Wasch- oder Reinigungsmittelprodukts wird durch die Verwendung eines die Filamentmatrix des Filaments bildenden wasserlöslichen Kunststoffs erreicht. Der Kunststoff kann also als Trägermatrix für die darin eingebundene Wasch- oder Reinigungsmittelkomponente genutzt und beim Waschen wenigstens im Wesentlichen rückstandfrei aufgelöst werden, so dass kein separater Entsorgungsbedarf entsteht. Die Filamentmatrix kann dabei bedarfsweise wenigstens teilweise aus einem Wasch- oder Reinigungsmittelprodukt gebildet werden. Dann kann hinsichtlich der Filamentmatrix eine doppelte Funktionalität bereitgestellt werden. Bevorzugt ist es jedoch grundsätzlich, wenn die wenigstens eine Komponente der Filamentmatrix ganz bewusst hinsichtlich ihrer Eignung als Filamentmatrix, zur Aufnahme der wenigstens einen Wasch- oder Reinigungsmittelkomponente, zur homogenen Fixierung der Wasch- oder Reinigungsmittelkomponente im Filament und/oder der Wasserlöslichkeit ausgesucht wird.

"Wasserlöslich" im Sinne der vorliegenden Erfindung bedeutet, grundsätzlich eine Löslichkeit, die ein wenigstens im Wesentlichen rückstandfreies Auflösen während eines Waschvorgangs unter üblichen Randbedingungen erlaubt. Insbesondere wird darunter jedoch eine Löslichkeit in destilliertem Wasser, gemessen bei 25 °C und pH 7,0, von mindestens 0,1 g/l, vorzugsweise mindestens 1 g/l, noch bevorzugter mindestens 10 g/l, am bevorzugtesten mindestens 100 g/l aufweist. In einigen Ausführungsformen weist die Komponente eine Löslichkeit von mindestens 0,1 bis 500 g/l, gemessen bei 25 °C, auf. Vorzugsweise benötigen die wasserlöslichen Substanzen weniger als 30 min, um sich zu lösen.

Der wenigstens eine wasserlösliche Kunstsoff und die wenigstens eine Waschmittelkomponente können zur Herstellung des entsprechenden Filaments gemeinsam in einem Extruder erhitzt und sodann gemeinsam in einem Strang als Extrudat aus wenigstens einer Düse des Extruders ausgestoßen werden. Das Erhitzen von Kunststoff und Wasch- oder Reinigungsmittelkomponente kann auf zwischen etwa 130°C und 230°C, insbesondere zwischen etwa 160° und 200°C erfolgen. Zudem kann das Erhitzen durch Reibung im Extruder und/oder durch zusätzliche Heizeinrichtungen erfolgen. Nachfolgend muss das Extrudat lediglich wieder abgekühlt werden, was aufgrund der geringen Durchmesser der Filamente problemlos möglich ist. Dabei kann der wenigstens eine wasserlösliche Kunststoff und die wenigstens eine Wasch- oder Reinigungsmittelkomponente als separates Granulat in den Extruder gegeben werden. Dies erhöht die Flexibilität bei der Herstellung der Filamente, weil beispielsweise ein wasserlöslicher Kunststoff mit unterschiedlichen Wasch- oder Reinigungsmittelkomponenten oder umgekehrt kombiniert werden kann, ohne unterschiedliche Granulate bereitzuhalten. Besonders bevorzugt kann es jedoch sein, wenn das Granulat als bereits sowohl den wenigstens einen wasserlöslichen Kunststoff als auch die wenigstens eine Wasch- oder Reinigungsmittelkomponente aufweist. Man spricht in diesem Zusammenhang auch von einem Granulat als Master Batch, also in Form einer Mischung mit der finalen Zusammensetzung des Filaments. Wenn bereits das Granulat als Mischung vorliegt, wird die Gefahr der Erzeugung eines nicht homogenen Filaments verringert.

Das Verfahren zur Herstellung des Wasch- oder Reinigungsmittelprodukts beruht bedarfsweise auf einem an sich bekannten Verfahren des 3D-Drucks, jedoch mit dem Unterschied, dass dazu wenigstens ein Filament nach einem der Ansprüche 1 bis 5 verwendet wird. Mit Hilfe des wenigstens einen Filaments als Werkstoff wird in einem 3D-Drucker ein dreidimensionales Wasch-oder Reinigungsmittelprodukt gedruckt. Grundsätzlich können auch mehrere Filamente verwendet werden und zwar gleichzeitig oder nacheinander. Dies bietet sich dabei insbesondere an, wenn sich die Filamente hinsichtlich ihrer Zusammensetzung, insbesondere in Bezug auf die wenigstens eine Wasch- oder Reinigungsmittelkomponente der Filamente, unterscheiden. Dann können je nach Kombination der Filamente die gewünschten Inhaltsstoffe oder kann die gewünschte Zusammensetzung des Wasch- oder Reinigungsmittelprodukts zusammengestellt werden, ohne für jedes Wasch- oder Reinigungsmittelprodukt ein Filament bevorraten zu müssen.

Der 3D-Druck des Wasch- oder Reinigungsmittelprodukts erfolgt vorzugsweise anhand einer Druckvorlage, die dem 3D-Drucker zur Verfügung gestellt wird und unter Verwendung eines Filaments nach einem der Ansprüche 1 bis 5. Die Druckvorlage ist dabei als Datei ausgebildet und umfasst Informationen betreffend das schrittweise Auftragen wenigstens eines Materials zu einem räumlichen Wasch- oder Reinigungsmittelprodukt. Die Datei kann dabei Informationen darüber enthalten, an welchen x-, y- und z-Koordinaten vom wenigstens einen Filament bereitgestelltes Material gedruckt wird. Zudem können Informationen enthalten sein, an welchen x-, y- und z-Koordinaten von welchem Filament gedruckt werden soll.

Nachfolgend werden der besseren Verständlichkeit halber und zur Vermeidung unnötiger Wiederholungen das Filament, die Verfahren, das Wasch- oder Reinigungsmittelprodukt und die Druckvorlage gemeinsam beschrieben, ohne jeweils im Einzelnen zwischen dem Filament, den Verfahren, dem Wasch- oder Reinigungsmittelprodukt und der Druckvorlage zu unterscheiden. Für den Fachmann ergibt sich jedoch anhand des Kontextes, welche Merkmale jeweils für das Filament, die Verfahren, das Wasch- oder Reinigungsmittelprodukt und die Druckvorlage bevorzugt sind.

Bei einer ersten besonders bevorzugten Ausgestaltung des Filaments, weist dieses einen Durchmesser zwischen 0,1 mm und 5 mm, vorzugsweise zwischen 0,2 mm und 4 mm, insbesondere zwischen 0,3 mm und 3 mm auf. Filamente mit entsprechenden Durchmessern können auf üblichen 3D-Druckern problemlos gedruckt werden. Außerdem wird so genügend Material bereitgestellt, um in kurzer Zeit ein hinreichend großes Wasch- oder Reinigungsmittelprodukt zu drucken, das ausreichende Mengen wenigstens einer Wasch- oder Reinigungsmittelkomponente umfasst.

Alternativ oder zusätzlich bietet es sich an, wenn das Filament eine Länge von wenigstens 5 m, vorzugsweise wenigstens 10 m, insbesondere wenigstens 50 m, weiter insbesondere wenigstens 100 m, aufweist. Filamente dieser Länge bieten genügend Material um eine nennenswerte Menge an Waschmittelprodukten zu drucken. Gleichzeitig können die Filamente noch platzsparend bereitgehalten und einfach gehandhabt werden.

Um eine homogene Verteilung der Wasch- oder Reinigungsmittelkomponente und gleichzeitig eine ausreichende Handhabbarkeit, Formstabilität und/oder Haltbarkeit des Filaments bereitstellen zu können, bietet es sich an, wenn die wenigstens eine Wasch- oder Reinigungsmittelkomponente als disperse Phase in der Filamentmatrix als kontinuierliche Phase aufgenommen ist. Die Filamentmatrix kann dabei ebenfalls aus lediglich einer Komponente oder mehreren Komponenten, insbesondere wasserlöslichen Kunststoffen, gebildet werden.

Alternativ oder zusätzlich kann der wenigstens eine wasserlösliche Kunststoff ein thermoplastischer Kunststoff sein. Dann kann das Filament besonders zweckmäßig im Wege des Fused Deposition Modeling (FDM)-Verfahrens oder des Fused Filament Fabrication (FFF) zur Herstellung eines Wasch- oder Reinigungsmittelprodukts genutzt werden. Das Verfahren ist einfach, schnell und kostengünstig.

Thermoplastische Polymere, auch Thermoplaste oder Plastomere genannt, sind lineare oder verzweigte Makromoleküle, die nicht vernetzt und unzersetzt schmelzbar sind, das heißt, die sich in einem bestimmten Temperaturbereich reversibel verformen lassen. Dabei kann zwischen amorphen Thermoplasten und kristallinen Thermoplasten unterschieden werden. Die Polymerketten von amorphen Thermoplasten weisen eine ungeordnete, regellose Struktur auf ("erstarrte Schmelze"). Bei teilkristallinen Thermoplasten bilden die amorphen Polymerketten eine Matrix, in der die Polymerkristallite eingebettet sind. Thermoplaste können im Falle amorpher Thermoplasten oberhalb der Glasübergangstemperatur (Tg), im Falle (teil)kristalliner Thermoplasten oberhalb der Schmelztemperatur (Tm) fließfähig werden. Sie können im erweichten Zustand durch Pressen, Extrudieren, Spritzgießen oder andere Formgebungsverfahren zu Formteilen verarbeitet werden. Es kommen grundsätzlich alle Thermoplasten, insbesondere wasserlösliche amorphe Thermoplasten und/oder kristalline Thermoplasten, in Frage.

Durch Erhitzen eines amorphen Kunststoffes über die Glasübergangstemperatur Tg hinaus beginnen die Polymerketten zu fließen, das Material wird folglich weich und verformbar. Teilkristalline Polymere liegen oberhalb Tg zunächst als zähelastisches Polymer und oberhalb der Schmelztemperatur Tm der kristallinen Bereiche als isotrope Schmelze vor. Diese reversible Verformbarkeit von Thermoplasten durch Erhitzen ermöglicht die thermische Verarbeitung dieser Kunststoffe oberhalb Tg bzw. Tm durch beispielsweise Extrusion.

Das Filament lässt sich besonders einfach herstellen und zu einem Wasch- oder Reinigungsmittelprodukt verarbeiten, wenn der wenigstens eine wasserlösliche Kunststoff ein Polyvinylalkohol ist. Der Polyvinylalkohol weist zudem eine sehr gute Wasserlöslichkeit auf, so dass der Kunststoff beim Waschen keine Rückstände bildet. Dies gilt insbesondere, wenn der Polyvinylalkohol teilverseift ist und demnach Anteile von Polyvinylacetat aufweist, der insbesondere kleiner 30 Gew.-%, vorzugsweise kleiner 20 Gew.-%, insbesondere kleiner 15 Gew.-%, beträgt. Mit dem Grad der Verseifung bestimmt sich zudem, ob der Polyvinylalkohol kaltwasserlöslich oder heißwasserlöslich ist. Bis zu einem Anteil von 1 Gew.-% Polyvinylacetat liegt Heißwasserlöslichkeit vor. Bis zu einem Anteil von 12 Gew.-% Polyvinylacetat liegt Kaltwasserlöslichkeit vor. Diese Eckdaten gelten für das Polyvinylalkohol-Copolymer, das aus Vinylalkohol- und Vinylacetat-Einheiten aufgebaut ist. Der Begriff Polyvinylalkohol erfasst aber auch Copolymere, die neben Vinylalkohol- und Vinylacetat-Einheiten auch Einheiten ausgewählt aus der Gruppe bestehend aus Acrylsäure, Methacrylsäure, cis-2-Butensäure, 3-Butensäure, Zimtsäure, Phenylzimtsäure, Pentensäure, Methylenmalonsäure, Acrylamid, Maleinsäure, Itaconsäure, 2-Acrylamido-2-methylpropansulfonsäure (AMPS) sowie den Alkalimetall- und Ammoniumsalzen davon aufweisen. Alternativ oder zusätzlich kommt als wasserlöslicher Kunststoff noch Polyethylenglycol, Cetylstearylalkohol und/oder Stearylalkohol in Frage. Auch diese Kunststoffe sind gut zu verarbeiten und gut wasserlöslich. Welcher Kunststoff oder welche Kunststoffe zur Herstellung des Filaments im Einzelnen bevorzugt sind, kann auch von der verwendeten Wasch- oder Reinigungsmittelkomponente abhängen, Die einzelnen Komponenten sollten nämlich gut mischbar sein und sich gut verbinden.

Die wenigstens eine Wasch- oder Reinigungsmittelkomponente kann wenigstens eine Komponente aus der Gruppe von Komponenten bestehend aus Tenside, Alkalien, Builder, Vergrauungsinhibatoren, optische Aufheller, Hueing Dyes, Enzyme, Bleichmittel, Photobleichmittel, Photokatalysatoren, Soil-Release-Polymere, Füller, Weichmacher, Duftstoffe, Antimalodor-Stoffe, wie z.B. Zinkrhizinoleat, Farbstoffe, Pflegestoffe, Säuren, Stärke, Isomalt, Zucker, Zellulose, Zellulosederivate, Carboxymethylcellulose, Polyetherimid, Silikonderivate, Polymethylimine und Mischungen davon.

In verschiedenen Ausführungsformen der Erfindung ist das mindestens eine Tensid ein amphoteres Tensid und/oder Aniontensid, vorzugsweise ein Betain und/oder Alkylethersulfat. Die Betaine sind vorzugsweise Alkylamidopropylbetaine, insbesondere lineare C8-C16-Alkylamidopropylbetaine, ganz besonders bevorzugt Cocoamidopropylbetain, das als Hauptbestandteil {3-(Dodecanoylamino)propyl(dimethyl)ammonio}acetat enthält. Entsprechende Betaine sind beispielsweise unter dem Handelsnamen Tego^{®} Betain von Evonik Industries kommerziell erhältlich.

Als anionische Tenside werden beispielsweise solche vom Typ der Sulfonate und Sulfate eingesetzt. Als Tenside vom Sulfonat-Typ kommen dabei vorzugsweise C9-13-Alkylbenzolsulfonate, Olefinsulfonate, d.h. Gemische aus Alken- und Hydroxyalkansulfonaten sowie Disulfonaten, wie man sie beispielsweise aus C12-18-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C12-18-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), z.B. die α-sulfonierten Methylester der hydrierten Kokos-, Palmkern- oder Talgfettsäuren geeignet.

Geeignete Alkylbenzolsulfonate sind vorzugsweise ausgewählt aus linearen oder verzweigten Alkylbenzolsulfonaten. Ein bevorzugter Vertreter ist Natriumdodecylbenzylsulfonat.

Als Alk(en)ylsulfate werden die Alkali- und insbesondere die Natriumsalze der Schwefelsäurehalbester der C12-C18-Fettalkohole, beispielsweise aus Kokosfettalkohol, Talgfettalkohol, Lauryl-, Myristyl-, Cetyl- oder Stearylalkohol oder der C10-C20-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C12-C16-Alkylsulfate und C12-C15-Alkylsulfate sowie C14-C15-Alkylsulfate bevorzugt.

Auch die Schwefelsäuremonoester der mit 1 bis 6 Mol Ethylenoxid ethoxylierten geradkettigen oder verzweigten C7-21-Alkohole, wie 2-Methyl-verzweigte C9-11-Alkohole mit im Durchschnitt 3,5 Mol Ethylenoxid (EO) oder C12-18-Fettalkohole mit 1 bis 7 Mol EO, sind geeignet.

In verschiedenen Ausführungsformen kann das Alkylethersulfat ausgewählt sein aus Fettalkoholethersulfaten. Bevorzugte Vertreter sind Na-C12-14 Fettalkoholethersulfate mit 2 Mol EO (Ethylenoxid). Der angegebenen Ethoxylierungsgrad stellt einen statistischen Mittelwert dar, der für ein spezielles Produkt eine ganze oder eine gebrochene Zahl sein kann. Die angegebenen Alkoxylierungsgrade stellen statistische Mittelwerte dar, die für ein spezielles Produkt eine ganze oder eine gebrochene Zahl sein können. Bevorzugte Alkoxylate/Ethoxylate weisen eine eingeengte Homologenverteilung auf (narrow range ethoxylates, NRE).

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische. Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium-, Kalium- oder Magnesiumsalze, insbesondere in Form der Natriumsalze vor. Anionische Tenside einschließlich der Seifen, d.h. insbesondere die Alkylbenzolsulfonate, Alkylethersulfate und Seifen, sind in den Wasch- und Reinigungsmitteln vorzugsweise zu einem bestimmten Gewichtsanteil enthalten, nämlich beispielsweise mit 5 bis 50 Gew.-% bezogen auf das Gesamtgewicht der Waschmittelformulierung. Bevorzugt sind Mengen von 7 bis 20 Gew.-% anionische Tenside bezogen auf das Gesamtgewicht der Waschmittelformulierung. Unabhängig davon ob das Waschmittel ein oder mehrere der anionischen Tenside enthält, beziehen sich die Mengenangaben auf die Gesamtmenge aller in dem Waschmittel enthaltenen anionischen Tenside.

Neben den genannten amphoteren und anionischen Tenside, können die Mischungen alternativ oder zusätzlich auch nichtionische Tenside enthalten. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 Mol EO pro Mol Alkohol bevorzugt. Zu den bevorzugten ethoxylierten Alkoholen gehören beispielsweise C12-14-Alkohole mit 3 EO oder 4 EO, C9-11-Alkohol mit 7 EO, C13-15-Alkohole mit 3 EO, 5 EO, 7 EO oder 8 EO, C12-18-Alkohole mit 3 EO, 5 EO oder 7 EO und Mischungen aus diesen, wie Mischungen aus C12-14-Alkohol mit 3 EO und C12-18-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester. Eine weitere Klasse von nichtionischen Tensiden, die vorteilhaft eingesetzt werden kann, sind die Alkylpolyglycoside (APG).

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Alkalien verbessern das Waschverhalten, etwa durch Neutralisation, Verseifung oder durch Verbesserung der Wirkung von Tensiden oder Enzymen. Bevorzugt sind beispielsweise Silikate, Carbonate und Hydroxide. Builder sind vorzugsweise Verbindungen, die Härtebildner, wie Calcium und Magnesium, entfernen. Builder sind beispielsweise Zeolithe, Phosphate, Phosphonate oder Acrylate und dienen beispielsweise dem lonenaustausch oder der Komplexbildung. Vergrauungsinhibatoren vermindern die Schmutzwiederanlagerung und sind beispielsweise Carboxymethylcellulose oder Polycarboxylate. Dagegen sind optische Aufheller farblose Farbpigmente die ultraviolettes Licht absorbieren und sichtbares Licht reflektieren. Bleichmittel können beispielsweise Natriumpercarbonat zum Oxidieren der Verschmutzung sein. Zudem kann als Bleichaktivator noch Tetraacetylethylendiamin (TAED) eingesetzt werden. Stärke wird dagegen eingesetzt, um der Wäsche Glanz zu verleihen. Soilreleasepolymere machen Textilfasern schmutzabweisend und steigern so auch die Wirkung des Waschmittelprodukts. Dabei sind Soilreleasepolymere beispielsweise hydrophile Polymere. Die Photobleiche führt zu einer Reihe verschiedener photochemischer Reaktionen, bei denen es zu einer lichtinduzierten Schädigung bzw. Modifikation des Fluorophors kommt. Hueing Dyes verbessern den Weißgrad von Oberflächen und Textilien.

Füllstoffe im Sinne dieser Erfindung sind grundsätzlich nicht waschaktive Substanzen, die aus Prozessgründen (z.B. Extrudierbarkeit oder Granulierbarkeit) hinzugegeben werden und/oder das Produkt auf den gewünschten Aktivsubstanzgehalt verdünnen.

Erfindungsgemäß wird der Begriff "Weichmacher" im Sinne der DIN 55945 : 1999-07 verwendet und bezeichnet somit "flüssige oder feste, indifferente organische Substanzen mit geringem Dampfdruck, überwiegend solche esterartiger Natur. Sie können ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden. Weichmacher verleihen den mit ihnen hergestellten Gebilden bzw. Überzügen bestimmte angestrebte physikalische Eigenschaften, wie zum Beispiel erniedrigte Einfriertemperaturen, erhöhtes Formveränderungsvermögen, erhöhte elastische Eigenschaften, verringerte Härte und gegebenenfalls gesteigertes Haftvermögen". In verschiedenen Ausführungsformen der Erfindung wird der mindestens eine Weichmacher ausgewählt aus der Gruppe bestehend aus Glycerin, Ethylenglycol, Diethylenglycol, 1,2-Propandiol, 1,3-Propandiol, Sorbitol und Mischungen davon.

Bedarfsweise kann die wenigstens eine Wasch- oder Reinigungsmittelkomponente mindestens einen Verdicker umfassen, insbesondere einen Verdicker ausgewählt aus der Gruppe bestehend aus Gelatine, Cellulose, Pullulan, Stärke, modifizierten Stärken, Methylcellulose, Carboxymethycellulose (CMC), Hydroxypropylmethylcellulosen (HPMCs) und Polyethylenoxide. Dadurch werden besser schäumbare Zusammensetzungen erzielt. Ganz besonders bevorzugte Verdicker sind Polyethylenoxide. Beispielsweise kann als Polyethylenoxid-Verdicker das Handelsprodukt POLYOX^{®} der Firma Dow eingesetzt werden. Diese Polyethylenoxide sind nichtionisch und weisen ein hohes Molekulargewicht auf. Zudem weisen sie viele typische Eigenschaften anderer Klassen von wasserlöslichen Polymeren auf, z.B. Schmiermitteleigenschaft, Bindemitteleigenschaft, Wasserretention, Verdickung und Filmbildungsfähigkeit.

Die flüssige Mischung kann in verschiedenen Ausführungsformen ferner einen oder mehrere Bestandteile umfassen, die üblicherweise in Wasch- und Reinigungsmitteln verwendet werden. Diese Bestandteile schließen ein, sind aber nicht beschränkt auf die Gruppe bestehend aus Enzymen, Bleichmitteln, Bleichaktivatoren, Komplexbildnern, Gerüststoffen, Elektrolyten, nichtwässrigen Lösungsmitteln, pH-Stellmitteln, Parfümen, Parfümträgern, Fluoreszenzmitteln, optischen Aufhellern, Farbstoffen, Hydrotropen, Silikonölen, Bentoniten, Antiredepositionsmitteln, Vergrauungsinhibitoren, Einlaufverhinderern, Knitterschutzmitteln, Farbübertragungsinhibitoren, Füllstoffen, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- und Imprägniermitteln, Quell- und Schiebefestmitteln sowie UV-Absorbern.

Weitere Inhaltsstoffe der erfindungsgemäßen Verfahrensprodukte können anorganische und organische Buildersubstanzen sein. Als organische und anorganische Gerüstsubstanzen eignen sich allgemein schwach sauer, neutral oder alkalisch reagierende lösliche und/oder unlösliche Komponenten, die Calciumionen auszufällen oder komplex zu binden vermögen. Zu den anorganischen Buildersubstanzen gehören wasserunlösliche oder nicht wasserlösliche Inhaltsstoffe, wie Aluminosilikate und insbesondere Zeolithe.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol. Ein bevorzugtes Dextrin ist in der britischen Patentanmeldung 94 19 091 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren.

Auch Oxydisuccinate und andere Derivate von Disuccinaten, vorzugsweise Ethylendiamindisuccinat, sind weitere geeignete Cobuilder. Dabei wird Ethylendiamin-N,N'-di-succinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen beispielsweise bei 3 bis 15 Gew.-%, bezogen auf das gesamte Wasch- oder Reinigungsmittel. Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphos-phonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Wasch- oder Reinigungsmittel auch Bleiche enthalten, bevorzugt sein, Aminoalkanphosphonate, insbesondere DTPMP, einzusetzen, oder Mischungen aus den genannten Phosphonaten zu verwenden.

Zu den bevorzugten Buildersubstanzen gehören auch amorphe Natriumsilikate mit einem Modul NazO: SiOz von 1:2 bis 1:3,3, vorzugsweise von 1:2 bis 1:2,8 und insbesondere von 1:2 bis 1:2,6, welche Sekundärwascheigenschaften aufweisen. Insbesondere bevorzugt sind verdichtete/kompaktierte amorphe Silikate, compoundierte amorphe Silikate und übertrocknete röntgenamorphe Silikate. Der Gehalt der (röntgen-)amorphen Silikate in insbesondere zeolithfreien Mitteln beträgt vorzugsweise 1 bis 10 Gew.-%, was einer bevorzugten Ausführungsform der Erfindung entspricht.

Besonders bevorzugte anorganische wasserlösliche Builder sind Alkalimetallcarbonate und Alkalimetallbicarbonate, wobei Natrium- und Kaliumcarbonat und insbesondere Natriumcarbonat zu den bevorzugten Ausführungsformen zählen. Der Gehalt der Alkalimetallcarbonate in insbesondere zeolithfreien Mitteln kann in einem sehr breiten Rahmen variieren und beträgt vorzugsweise 1 bis 50 Gew.-%, vorteilhafterweise 5 bis 40 Gew.-%, insbesondere 8 bis 30 Gew.- %, wobei üblicherweise der Gehalt an Alkalimetallcarbonaten höher ist als an (röntgen-) amorphen Silikaten. Nach einer anderen bevorzugten Ausführungsform ist das erfindungsgemäße Wasch- oder Reinigungsmittel frei von Alkalimetallcarbonaten. Brauchbare organische Gerüstsubstanzen sind beispielsweise die in Form ihrer Alkali- und insbesondere Natriumsalze einsetzbaren Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Auch die Säuren an sich können eingesetzt werden. Die Säuren besitzen neben ihrer Builderwirkung typischerweise auch die Eigenschaft einer Säuerungskomponente und dienen somit, wie beispielsweise in den erfindungsgemäßen Verfahrensprodukten, auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als organische Builder sind weiter polymere Polycarboxylate geeignet. Dies sind beispielsweise die Alkalimetallsalze der Polyacrylsäure oder der Polymethacrylsäure, beispielsweise solche mit einer relativen Molekülmasse von 500 bis 70000 g/mol. Bei den für polymere Polycarboxylate angegebenen Molmassen handelt es sich im Sinne dieser Schrift um gewichtsmittlere Molmassen Mw der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Zu den sonstigen häufig verwendeten Bestandteilen von Wasch- und Reinigungsmitteln zählen Vergrauungsinhibitoren (Schmutzträger), Bleichmittel und Bleichaktivatoren, optische Aufheller, Enzyme, textilweichmachende Stoffe, Farb- und Duftstoffe sowie Neutralsalze.

Unter den als Bleichmittel dienenden, in Wasser H₂O₂ liefernden Verbindungen haben das Natriumperborat-tetrahydrat (NaBOz · H₂O₂ · 3 H₂O) und das Natriumperborat-monohydrat (NaBOz · H₂O₂) besondere Bedeutung. Weitere brauchbare Bleichmittel sind beispielsweise Peroxycarbonat (Na₂CO₃·1,5 H₂O₂), Peroxypyrophosphate, Citratperhydrate sowie _{H2O2} liefernde persaure Salze oder Persäuren, wie Perbenzoate, Peroxaphthalate, Diperazelainsäure oder Diperdodecandisäure. Der Gehalt der Mittel an Bleichmitteln beträgt vorzugsweise 5 bis 25 Gew.-% und insbesondere 10 bis 20 Gew.-%, wobei vorteilhafterweise Peroxycarbonat eingesetzt wird. Zudem können Photobleiche und Photokatalysatoren, wie Tetrabenzo-Tetraazaporphin, bzw. Zink- oder Aluminiumphtalocyaninsulfat verwendet werden.

Um beim Waschen bei Temperaturen von 60°C und darunter eine verbesserte Bleichwirkung zu erreichen, können Bleichaktivatoren in die Präparate eingearbeitet werden. Beispiele hierfür sind mit H₂O₂ organische Persäuren bildende N-Acyl- beziehungsweise O-Acyl-Verbindungen, vorzugsweise N,N'-tetraacylierte Diamine, wie N,N,N',N'-Tetraacetylethylendiamin, ferner Carbonsäureanhydride und Ester von Polyolen wie Glucosepentaacetat. Der Gehalt der bleichmittelhaltigen Mittel an Bleichaktivator liegt in dem üblichen Bereich, vorzugsweise zwischen 1 und 10 Gew.-% und insbesondere zwischen 3 und 8 Gew.-%.

Vergrauungsinhibitoren haben die Aufgabe, den von der Faser abgelösten Schmutz in der Flotte suspendiert zu halten und so das Vergrauen zu verhindern. Hierzu sind wasserlösliche Kolloide meist organischer Natur geeignet, wie beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, zum Beispiel abgebaute Stärke, Aldehydstärken usw.. Auch Polyvinylpyrrolidon ist brauchbar. Vorzugsweise werden Carboxymethylcellulose (Na-Salz), Methylcellulose, Methylhydroxyethylcellulose und deren Gemische sowie Polyvinylpyrrolidon, insbesondere in Mengen von 0,5 bis 5 Gew.-%, bezogen auf das Mittel, eingesetzt.

Die Waschmittel können als optische Aufheller Derivate der Diaminostilbendisulfonsäure beziehungsweise deren Alkalimetallsalze enthalten. Geeignet sind zum Beispiel Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe, eine Anilinogruppe oder eine 2-Methoxyethylaminogruppe tragen. Weiterhin können Aufheller vom Typ des substituierten 4,4'-Distyryl-di-phenyls anwesend sein; zum Beispiel die Verbindung 4,4'-Bis(4-chlor-3-sulfostyryl)-diphenyl. Auch Gemische der vorgenannten Aufheller können verwendet werden.

Als Enzyme kommen solche aus der Klasse der Proteasen, Lipasen und Amylasen beziehungsweise deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Die Enzyme können an Trägerstoffen adsorbiert und/oder in Hüllensubstanzen eingebettet sein, um sie gegen vorzeitige Zersetzung zu schützen.

Als Stabilisatoren insbesondere für Perverbindungen und Enzyme kommen die Salze von Polyphosphonsäuren, insbesondere 1-Hydroxyethan-1,1-diphosphonsäure (HEDP) in Betracht.

Diese Aufzählung von weiteren Wasch- und Reinigungsmittelinhaltsstoffen ist keineswegs abschließend, sondern gibt lediglich die wesentlichsten typischen Inhaltsstoffe derartiger Mittel wieder. Daher können die hierin beschriebenen Wasch- und Reinigungsmittel in verschiedenen Ausführungsformen diverse weitere, hierin nicht beschriebene, aber im Stand der Technik bekannte Inhaltsstoffe enthalten.

Bei einer ersten besonders bevorzugten Ausgestaltung des Verfahrens zur Herstellung des Filaments wird das Extrudat nicht wie sonst üblich mit Wasser gekühlt. Das Kühlen des Extrudats erfolgt entweder mit einem Gas oder Gasgemisch, wobei sich der Einfachheit in der Handhabung halber insbesondere Luft anbietet. Grundsätzlich wird durch die Kühlung mit einem Gas oder Gasgemisch vermieden, dass sich die Filamentmatrix auflöst oder die wenigstens eine Wasch-oder Reinigungsmittelkomponente aus der Filamentmatrix herausgelöst wird. Dies würde zu unerwünschten Verlusten führen und die gewünschte Anwendung der Filamente gefährden. Die Kühlung über Gase hat grundsätzlich den Nachteil des geringen Wärmetransports, was aufgrund der dünnen Filamente aber in vielen Fällen tolerierbar sein wird. Um einen besseren Wärmetransport bereitstellen zu können, bietet sich die Kühlung mittels einer Flüssigkeit, einem Flüssigkeitsgemisch und/oder einer Lösung an, wobei die Flüssigkeit, das Flüssigkeitsgemisch und/oder die Lösung vorzugsweise nicht wässrig sein sollte, um zu vermeiden, dass sich die Filamentmatrix auflöst oder die wenigstens eine Wasch- oder Reinigungsmittelkomponente aus der Filamentmatrix herausgelöst wird.

Unabhängig von der Art der Kühlung des Extrudats wird das Filament insbesondere nach dem Abkühlen auf Länge geschnitten und/oder aufgewickelt. Das Filament kann als Coil aufgewickelt werden und zwar auf eine Spule, wobei bedarfsweise auch auf eine Spule verzichtet werden kann. Die Verwendung einer Spule hat den Vorteil, dass das Filament auf der Spule gelagert und transportiert werden kann, um eine Beschädigung des Filaments, etwa einen Bruch des Filaments zu vermeiden. Ohne die Spule, kann diese und deren Handling jedoch eingespart werden. Es ist daher für den Einzelfall zu entscheiden, welche Vorteile überwiegen.

Die Ausgestaltung des Wasch- oder Reinigungsmittelprodukts weist die Form eines Streifens, einer Wabenstruktur oder einer Kugel auf. Besonders vorteilhaft ist es, wenn das Produkt eine wabenartige Struktur aufweist, die durch Wasser durchströmt werden kann. Die Form, in der das Wasch- oder Reinigungsmittelprodukt gedruckt wird, kann so gewählt werden, dass es leicht und platzsparend gehandhabt und bevorratet werden kann. Zudem können die Form und die Größe des Wasch-oder Reinigungsmittelprodukts so gewählt werden, dass sich das Wasch- oder Reinigungsmittelprodukt in der gewünschten Geschwindigkeit während des Waschgangs auflöst und/oder das Wasch- oder Reinigungsmittelprodukt die wenigstens eine Wasch- oder Reinigungsmittelkomponente in der gewünschten Geschwindigkeit während des Waschgangs abgibt. Hierfür eignet sich besonders eine wabenartige Struktur, die von Wasser durchflossen werden kann und sich somit schneller in der Waschlauge oder in der Einspülkammer auflöst.

Um das Wasch- oder Reinigungsmittel an die jeweiligen Anforderungen für eine optimale Wäsche anpassen zu können, kann das Wasch- oder Reinigungsmittelprodukt, insbesondere unterschiedliche Abschnitte des Wasch- oder Reinigungsmittelprodukts, aus unterschiedlichen Filamenten gedruckt werden. Die unterschiedlichen Filamente können dabei wenigstens teilweise unterschiedliche Wasch- oder Reinigungsmittelkomponenten aufweisen. So kann aus einer begrenzten Anzahl an unterschiedlichen Filamenten eine große Vielfalt unterschiedlicher und an spezielle Anwendungsfälle angepasster Wasch- oder Reinigungsmittelprodukte gedruckt werden.

Beim 3D-Druck des Wasch- oder Reinigungsmittelprodukts kann Material von unterschiedlichen Filamenten nebeneinander und bedarfsweise auch gleichzeitig gedruckt werden. Dies bietet sich beispielsweise an, wenn sich die entsprechenden Wasch- oder Reinigungsmittelkomponenten gemeinsam auflösen sollen. Wenn sich zunächst ein erstes Material des Wasch- oder Reinigungsmittelprodukts auflösen soll und erst zeitverzögert ein weiteres Material des Wasch-oder Reinigungsmittelprodukts, kann wenigstens ein innerer Abschnitt des Wasch- oder Reinigungsmittelprodukts mit einem Filament und ein äußerer, den inneren Abschnitt des Wasch-oder Reinigungsmittelprodukts umschließender Abschnitt mit einem anderen Filament gedruckt werden. Dabei umschließt der äußere Abschnitt den inneren Abschnitt vorzugsweise vollständig, so dass ein zeitversetztes Auflösen sichergestellt wird. Bedarfsweise können auch mehr als zwei Abschnitte auf diese Weise kombiniert werden, und zwar ineinander, etwa im Sinne der Schichten einer Zwiebel. Es können aber auch äußere Abschnitte nebeneinander vorgesehen sein, die jeweils einen inneren Abschnitt aus einem anderen Material umschließen.

In bestimmten Ausführungsformen kann das Wasch- oder Reinigungsmittelprodukt ein Behältnis aufweisen, das mittels 3D-Druck hergestellt worden ist.

Das Wasch- und Reinigungsmittel kann bei Bedarf mittels 3D-Dualdruckverfahrens gleichzeitig in einem geschlossenen oder wabenartigen, durchflutbaren Kunststoffbehälter eingebettet werden. Diese Kunststoffhülle kann im Falle eines maschinellen Wasch- oder Reinigungsmittels ebenso aus wasserlöslichen Material wie z.B. PVA bestehen. Der Vorteil dieser Hülle besteht darin, dass der Konsument nicht direkt mit dem Wasch- oder Reinigungsmittel in Kontakt kommt. Zudem dient das Behältnis z.B. im Falle eines Reinigungsmittels (z.B. Klosteins mit Hänger) zur kontinuierlichen Abgabe des Wasch- und Reinigungsmittels. Ein 3D-Dual- oder Multidruckverfahren eignet sich, um das Wasch- oder Reinigungsmittelprodukt in einem geschlossenen oder wabenartigen, durflutbaren Kunststoffbehälter einzubetten.

Bei einem ersten besonders bevorzugten Waschmittelprodukt weist dieses die Form eines Tabs, eines Streifens, einer Folie, einer Wabenstruktur oder einer Kugel auf. So kann eine leichte Handhabung und/oder Lagerung des Waschmittelprodukts erreicht werden. Zudem können die Form und die Größe des Waschmittelprodukts so gewählt werden, dass sich das Waschmittelprodukt in der gewünschten Geschwindigkeit während des Waschgangs auflöst, bzw. die wenigstens eine Waschmittelkomponente in der gewünschten Geschwindigkeit während des Waschgangs abgibt.

Alternativ oder zusätzlich können unterschiedliche Abschnitte, insbesondere wenigstens ein innerer Abschnitt und wenigstens ein den inneren Abschnitt, vorzugsweise vollständig, umschließender äußerer Abschnitt, aus wenigstens teilweise unterschiedlichen Filamenten gedruckt sein. Auf diese Weise kann eine gemeinsame und/oder zeitversetzte Abgabe von Waschmittelkomponenten erreicht werden. Beispielsweise wird die Waschmittelkomponente des inneren Abschnitts erst dann in Lösung gehen, wenn sich der äußere Abschnitt wenigstens im Wesentlichen aufgelöst hat.

In bestimmten Ausführungsformen wird beim Druck des Filaments über eine zweite Düse das Filament mir einem Strahl Makrokapseln kombiniert. Makrokapseln sind Kern-Hülle-Strukturen mit einer Größe von 1 mm bis 30 mm Durchmesser. Im Kern befinden sich Aktivsubstanzen, insbesondere Duftstoffe. Dies ermöglicht die Ausstattung des gedruckten Filaments mit einer Aktivsubstanz, ohne die dem Druckvorgang des Filaments auszusetzen. Die Auswahl der Aktivsubstanz in den Makrokapseln kann in einigen Ausführungsformen vorgegeben sein. In anderen Ausführungsformen kann sie vom Verbraucher bestimmt werden. So kann der Verbraucher beispielsweise das Parfüm in den Makrokapseln bestimmen, die mit dem gedruckten Filament kombiniert werden. Die Makrokapseln können so ausgestattet werden, dass beim Druckvorgang der Inhalt mit dem gedruckten Filament vermengt wird und/oder die intakten Kapseln vom gedruckten Filament eingeschlossen werden. Letztendlich erlaubt es diese Ausgestaltungsform, Aktivstoffe gezielt in das gedruckte Filament zu integrieren. Dies lässt sich unter dem Begriff "mass customization" subsummieren.

### Beispiele

Nachfolgend sind einige Beispiele für Zusammensetzungen von Filamenten angegeben, die bevorzugte Eigenschaften aufweisen.

In der Tabelle 1 sind die Intervallbreiten der Anteile von Klassen von Inhaltsstoffen von Filamenten für drei Beispiele, Beispiele 1 bis 3, in Gew.-% angegeben. Die Intervallbreiten der Klassen von Inhaltsstoffen sind so zu verstehen, dass die Anteile innerhalb der Intervallbreiten so gewählt werden können, dass sich die entsprechenden Anteile zu wenigstens im Wesentlichen 100% summieren. Ein geringer Rest, der durch nicht aufgeführte Komponenten gebildet wird, kann zulässig sein. Als Rest ist beispielsweise ein Anteil von weniger als 5 Gew.-%, insbesondere weniger als 3 Gew.-%, vorzugsweise weniger als 1 Gew.-%, denkbar. Die Zusammensetzung des Filaments nach Beispiel 1 bietet die größte Flexibilität. Insbesondere kann das Filament lediglich ausgesuchte Waschmittelkomponenten zusätzlich zum wasserlöslichen Kunststoff aufweisen. Dies ist zweckmäßig, wenn für eine bestimmte Waschaufgabe auf bestimmte Klassen von Inhaltsstoffen verzichtet werden kann, oder wenn das Waschmittelprodukt aus mehreren unterschiedlichen Filamenten gedruckt wird. So kann das Waschmittelprodukt beispielsweise in einigen Bereichen eine andere Zusammensetzung als in anderen Bereich aufweisen. Vorzugsweise unterscheiden sich hinsichtlich der Zusammensetzung wenigstens ein innerer Abschnitt des Waschmittelprodukts und wenigstens ein äußerer Abschnitt des Waschmittelprodukts, der den inneren Abschnitt, vorzugweise vollständig, umschließen kann. Grundsätzlich kann so mit einer geringen Anzahl an unterschiedlichen Filamenten eine große Vielfalt von unterschiedlichen Waschmittelprodukten im Wege des 3D-Drucks gedruckt werden. Dies lässt sich auch auf Reinigungsmittel übertragen.

Das Beispiel 2 nach der Tabelle 1 stellt Filamente dar, die alle aufgeführten Klassen von Inhaltsstoffen aufweisen, auch wenn teilweise lediglich geringe Mengen vorgesehen sein können. Ein Waschmittelprodukt kann daher bevorzugt wenigstens im Wesentlichen vollständig aus einem Filament nach Beispiel 2 gedruckt werden, auch wenn dies nicht erforderlich ist. Filamente nach dem Beispiel 3 der Tabelle 1 weisen die Klassen von Inhaltsstoffen verglichen mit dem Beispiel 2 in engeren Bereichen auf. Mit entsprechenden Filamenten können Waschmittelprodukte gedruckt werden, die viele unterschiedliche Eigenschaften aufweisen, die zudem deutlich beim Waschprozess zu Tage treten. Insbesondere können so wirksame Waschmittelprodukte mit einem einzigen Filament gedruckt werden.

**Tabelle 1: Beispielhafte Zusammensetzungen**

| | Beispiel 1 in Gew.-% | Beispiel 2 in Gew.-% | Beispiel 3 in Gew.-% |
|---|---|---|---|
| Polyvinylalkohol (PVA) | 60 - 90 | 60 - 90 | 70-80 |
| Tenside | 1 - 30 | 5-30 | 10-20 |
| Soilreleasepolymer | 0-1 | 0,1 - 1 | 0,1 -0,5 |
| Enzyme | 0-2 | 0,01 - 1 | 0,1 - 1 |
| Photobleiche | 0-0,1 | 0,005 - 0,1 | 0,01 - 0,03 |
| Bleichmittel und/oder Duftstoffe | 0-1 | 0,01 - 1 | 0,1 - 0,5 |
| Füller und Weichmacher (z.B. PEG, Isomalt, Zucker, Seifen, Zellulose und/oder Stärke) | 0-15 | 1 - 15 | 5-10 |

In der Tabelle 2 sind die Anteile von Komponenten von Beispielen bestimmter Filamente, Beispiele 4 bis 6, mit bevorzugten Eigenschaften jedenfalls für bestimmte Anwendungen angegeben. Die Filamente gemäß den Beispielen 4 bis 6 können insbesondere ohne weitere Filamente zur Herstellung von Waschmittelprodukten genutzt werden, da die Filamente alle wesentlichen Komponenten für eine Vielzahl von Anwendungen aufweisen. Die Zusammensetzungen werden daher als auch als Vollzusammensetzungen bezeichnet, können aber natürlich auch zusammen mit weiteren Filamenten zur Herstellung von Waschmittelprodukten herangezogen werden, etwa um das Waschmittelprodukt an spezielle Anwendungen anzupassen.

**Table 2: Beispielhafte Zusammensetzungen**

| | Beispiel 4 in Gew.-% | Beispiel 5 in Gew.-% | Beispiel 6 in Gew.-% |
|---|---|---|---|
| C12-18 Fettalkohole mit 7 Mol EO | 2 | 2 | 2 |
| C12-18 Fettalkoholsulfate mit 7 Mol EO (Natriumsalz) | 1,5 | 1,5 | 1,5 |
| Lineare Alkylbenzolsulfonate (Natriumsalz) | 10 | 10 | 10 |
| Natriumcarbonat | 20 | 20 | 5 |
| Natriumhydrogencarbonat | 6,5 | 0 | 0 |
| Natriumdisilikat | 4 | 4 | 4 |
| Natriumpercarbonat | 17 | 17 | 0 |
| Tetraacetylethylendiamin (TAED) | 4 | 4 | 0 |
| Polyacrylat (Natriumsalz) | 3 | 3 | 3 |
| Carboxymethylcellulose (Natriumsalz) | 1 | 1 | 1 |
| Phosphonat | 1 | 1 | 1 |
| Natriumsulfat | 1 | 1 | 1 |
| Enzyme | 1 | 1 | 1 |
| Duftstoff | 0,9 | 0,9 | 0,9 |
| Optischer Aufheller | 0,08 | 0,08 | 0,08 |
| Tetrabenzo-Tetraazaporphin (Tinolux) | 0,011 | 0,011 | 0,011 |
| Polyethylenglycol (PEG)-1000 (Molmasse) | 24 | 0 | 0 |
| Polyvinylalkohol (PVA) | 0 | ≤ 100 | ≤ 100 |

In der Tabelle 3 sind Zusammensetzungen von Filamenten angegeben, die ebenfalls als Waschmittelprodukt geeignet sind. Um weitere Eigenschaften des Waschmittelprodukts bereitzustellen, kann neben dem entsprechenden Filament aus Tabelle 3 noch ein anderes zusammengesetztes Filament zum Drucken des Waschmittelprodukts verwendet werden.

**Table 3: Beispielhafte Zusammensetzungen**

| | Beispiel 7 | Beispiel 8 | Beispiel 9 |
|---|---|---|---|
| C12-18 Fettalkohole mit 7 EO | 2 | 2 | 2 |
| C12-18 Fettalkoholsulfate with 7 EO (Natriumsalz) | 1,5 | 1,5 | 1,5 |
| Lineare Alkylbenzolsulfonate (Natriumsalz) | 10 | 10 | 10 |
| Natriumcarbonat | 10 | 10 | 0 |
| Natriumdisilikat | 4 | 4 | 4 |
| Natriumpercarbonat | 17 | 17 | 0 |
| Polyacrylat (Natriumsalz) | 3 | 3 | 3 |
| Carboxymethylcellulose (Natiumsalz) | 1 | 1 | 1 |
| Phosphonat | 1 | 1 | 1 |
| Natriumsulfat | 1 | 0 | 0 |
| Enzyme | 10 | 10 | 10 |
| Duftstoff | 0,9 | 0,9 | 0,9 |
| Tetrabenzo-Tetraazaporphin (Tinolux) | 0,011 | 0,011 | 0,011 |
| Polyethylenglycol (PEG)-1000 (Molmasse) | ≤ 100 | 0 | 0 |
| Polyvinylalkohol (PVA) | 0 | ≤ 100 | ≤ 100 |

Die entsprechenden Komponenten erfüllen Funktionen, die bei Waschmitteln grundsätzlich bekannt ist. Der Polyvinylalkohol und das Polyethylenglycol bilden den wasserlöslichen Kunststoff und damit die Filamentmatrix.

Als besonders zweckmäßig für ein Filament hat sich im Übrigen die Zusammensatzung gemäß Tabelle 4 herausgestellt. Geringfügige Abweichungen zu dieser Zusammensetzung sind grundsätzlich zulässig.

**Tabelle 4 Filamentzusammensetzung**

| | Beispiel 10 in Gew.-% |
|---|---|
| Polyvinylalkohol (PVA) | 75 |
| Lineares Alkylbenzolsulfonat (Natriumsalz) | 15 |
| Soilreleasepolymer (Texcare SRA300F) | 0,2 |
| Photobleiche | 0,02 |
| Polyethylenglycol (PEG12000S) | 9,78 |

### Beschreibung der Zeichnung

Nachfolgend wird die Erfindung anhand einer lediglich Ausführungsbeispiele darstellenden Zeichnung näher erläutert. Im Folgenden wird der Begriff Waschmittel oder Waschmittelprodukt verwendet. Die Ausführungen gelten aber genauso für Reinigungsmittel und Reinigungsmittelprodukte. In der Zeichnung zeigt
- Fig. 1: ein erfindungsgemäßes Verfahren zur Herstellung eines erfindungsgemäßen Filaments in einer schematischen Darstellung,
- Fig. 2: ein erfindungsgemäßes Verfahren zur Herstellung eines Waschmittelprodukts in einer schematischen Darstellung,
- Fig. 3: einen Druckkopf zum Drucken eines erfindungsgemäßen Waschmittelprodukts in einer schematischen Darstellung,
- Fig. 4: ein erstes erfindungsgemäßes Waschmittelprodukt in einer perspektivischen Ansicht,
- Fig. 5: ein zweites erfindungsgemäßes Waschmittelprodukt in einer Schnittansicht,

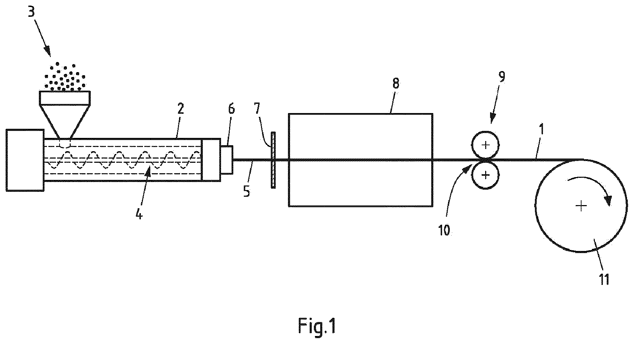

In der Fig. 1 ist schematisch ein Verfahren zur Herstellung eines Filaments 1 zur Herstellung eines Waschmittelprodukts im Wege des 3D-Drucks dargestellt. In einem ersten Schritt wird einem Extruder 2 wenigstens ein Granulat 3 zugeführt. Die Partikel des Granulats 3 können bereits die Zusammensetzung des herzustellenden Filaments 1 aufweisen, so dass nur ein Granulat 3 zugeführt werden muss. Allerdings muss zuvor das Granulat 3 nach der gewünschten Zusammensetzung des Filaments 1 hergestellt werden. Dies erfolgt vorzugsweise mit einem Extruder. Alternativ können auch unterschiedliche Granulate 3 mit unterschiedlicher Zusammensetzung in einem bestimmten Verhältnis zueinander dem Extruder 2 zugeführt werden, so dass sich im Extruder 2 die Zusammensetzung des Filaments 1 ergibt.

Das Granulat 3 wird im Extruder wenigstens teilweise aufgeschmolzen oder erweicht. Es schmelzen oder erweichen bei den bevorzugten Temperaturen von 130°C - 230°C, insbesondere 160°C - 200°C, je nach der Zusammensetzung der Filamente 1 nicht alle Komponenten. Insbesondere ist jedoch wenigstens ein thermoplastischer Kunststoff vorgesehen, der schmilzt und in dem die übrigen Komponenten dann im Extruder 2 wenigstens im Wesentlichen homogen verteilt werden. Besonders bevorzugt handelt es sich bei dem wenigstens einen thermoplastischen Kunststoff um den wenigstens einen wasserlöslichen Kunststoff, der so die Filamentmatrix bilden und die übrigen Komponenten darin aufnehmen kann. Der Kunststoff bildet dann vorzugsweise die kontinuierliche Phase, in der die übrigen Komponenten möglichst homogen als disperse Phase aufgenommen sind. Die im Extruder 2 erzeugte Masse wird über die wenigstens eine Schnecke 4 im Extruder 2 als Strang 5 aus wenigstens einer Düse 6 des Extruders 2 herausgedrückt.

Das Extrudat wird beim dargestellten und insoweit bevorzugten Verfahren dann durch eine Öffnung in einer Platte 7, z.B. Lochscheibe, hindurchgezogen, welche die Größe und die Form des späteren Filaments 1 vorgibt. Zudem ist beim dargestellten Verfahren eine Kühlung 8 des Extrudats vorgesehen, die das Extrudat mit einem Kühlluftstrom oder einem nicht wässrigen Kühlmedium zum direkten Wärmetausch in Kontakt bringt.

Das abgekühlte Extrudat bildet dann das Filament 1, das über Transportwalzen 9 bzw. durch den wenigstens einen Walzenspalt 10 der Transportwalzen 9 geführt wird, die das Extrudat vom Extruder 2 abziehen und durch die Lochscheibe 7 und die Kühleinrichtung 8 ziehen. Das Filament 1 kann auch unter Zug auf eine Spule 11 aufgewickelt werden, so dass dann Transportwalzen 9 nicht erforderlich wären. Das Filament 1 wird beim dargestellten und insoweit bevorzugten Verfahren auf die Spule 11 aufgewickelt.

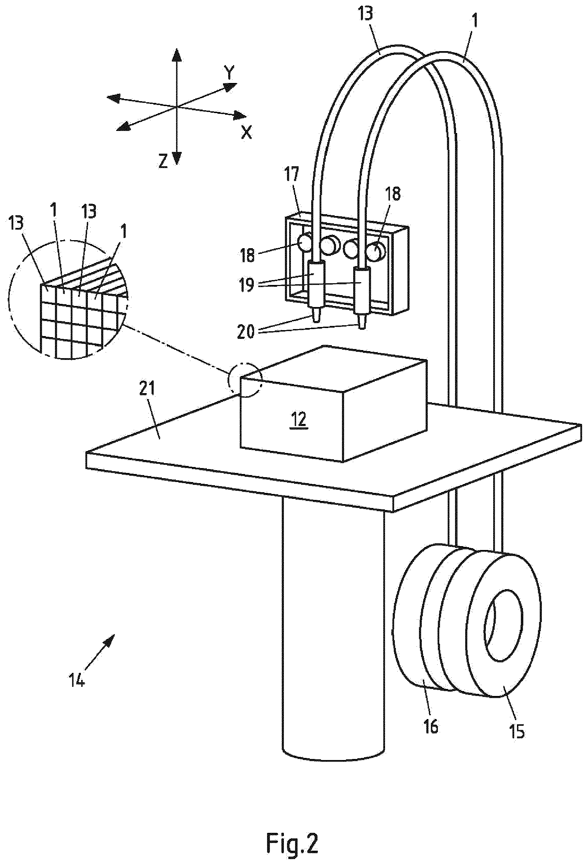

In der Fig. 2 ist das Verfahren zur Herstellung von Waschmittelprodukten 12 aus wenigstens einem Filament 1,13 schematisch dargestellt. Beim dargestellten und insoweit bevorzugten 3D-Drucker 14 können zwei unterschiedliche Filamente 1,13 zum Druck herangezogen werden. Weitere Filamente wären jedoch denkbar. Die Filamente 1,13 werden von der jeweiligen Spule 15,16 abgerollt und in einen Druckkopf 17 geführt, wo sie zwischen Antriebsrädern 18 reibschlüssig gehalten sind. Durch gegenläufiges Drehen der Antriebsräder 18 wird das entsprechende Filament 1,13 durch eine Heizeinrichtung 19 und danach aus einer Extrusionsdüse 20 herausgedrückt. Die herausgedrückte Masse des Filaments 1,13 bildet dabei das Waschmittelprodukt 12 in der gewünschten Form und Größe. Dazu kann der Druckkopf 14 in der x-, y, und/oder z-Richtung, also allen drei Raumrichtungen bewegt werden. Alternativ kann auch die Unterlage 21, auf der das Waschmittelprodukt 12 gedruckt wird in der x-, y, und/oder z-Richtung verstellt werden. In diese Richtung oder in diese Richtungen muss dann der Druckkopf 17 nicht verstellbar sein. Welche Bewegungen der Druckkopf 17 und/oder die Unterlage 21 in der x-, y, und/oder z-Richtung durchführen und an welcher Stelle des Druckkopfs 17 relativ zur Unterlage 21 welches Filament 1,13 zum Drucken verwendet wird, wird über die Druckvorlage vorgegeben, die alle entsprechenden Informationen in einer von einem Computer auslesbaren Form aufweist, insbesondere einer Datei aufweist. Die Datei enthält die Daten der Druckvorlage und/oder die Daten des Waschmittelprodukts 12, um dieses mit einem bestimmten 3D-Drucker 14 drucken zu können. Die Daten sind bedarfsweise als Datei auf einem Datenträger oder Speichermedium gespeichert. Die Datei kann dauerhaft in dem 3D-Druck gespeichert sein, so dass die Datei, beispielsweise über eine Benutzerschnittstelle, wiederholt aufgerufen werden kann. Die Daten können auch per Funk, Mobilfunknetz, W-LAN, Bluetooth, USB-Stick oder auf eine andere geeignete Weise an den 3D-Drucker 14 zum Druck des gewünschten Waschmittelprodukts 12 übertragen werden. Unter Umständen kann die Datei nach dem Drucken des Waschmittelprodukts 12 wieder gelöscht werden. Es muss dann also ähnlich eines Druckers zum Bedrucken von Papier, etwa mittels Tinte oder Toner, für jeden Druckauftrag eine entsprechende Datei bzw. die entsprechenden Informationen an den 3D-Drucker 14 übermittelt werden.

Bedarfsweise kann das gesamte Waschmittelprodukt 12 mit nur einem Filament 1,13 oder gemeinsam mit beiden Filamenten 1,13 bedruckt werden. Besonders bevorzugt kann es sein, wenn bestimmte Abschnitte des Waschmittelprodukts 12 mit dem einen Filament 1,13 und andere Abschnitte des Waschmittelprodukts 12 mit einem anderen Filament 1,13 und bedarfsweise wieder andere Abschnitte des Waschmittelprodukts 12 mit einem dritten Filament usw. gedruckt werden.

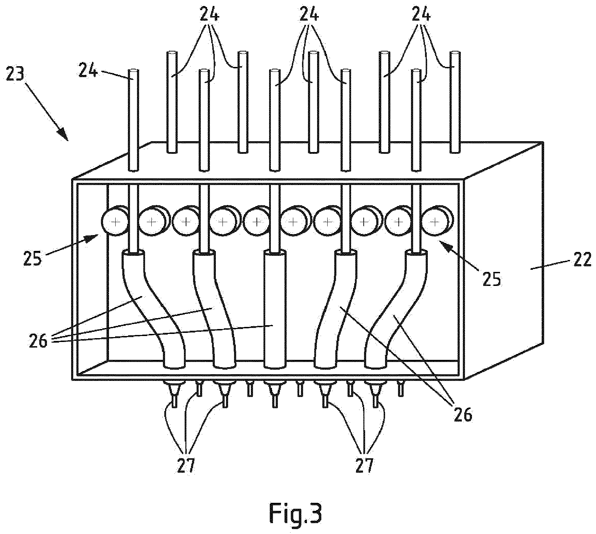

In der Fig. 3 ist ein Druckkopf 22 eines 3D-Druckers 23 zum Drucken sehr unterschiedlicher Waschmittelprodukte 12 dargestellt. Dem Druckkopf 22 werden parallel sehr viele sich hinsichtlich ihrer Zusammensetzung unterscheidende Filamente 24 zugeführt. Jedem Filament 24 ist ein Antrieb 25, eine Heizeinrichtung 26 und eine Extrusionsdüse 27 zugeordnet. Je nach der Druckvorlage wird dann für das Drucken eines bestimmten Waschmittelprodukts 12 das entsprechende Filament 24 ausgewählt, was zum Drucken herangezogen werden soll. Alternativ können auch mehrere Filamente 24 zum Drucken eines Waschmittelprodukts 12 herangezogen werden. Bei Verwendung entsprechender Druckköpfe 22 muss nicht zwischen den einzelnen Druckvorgängen das zu druckende Filament 24 gewechselt werden. Es kann lediglich erforderlich sein, ein Filament 24 nachzufüllen, wenn das vorhandene Filament 24 verbraucht ist.

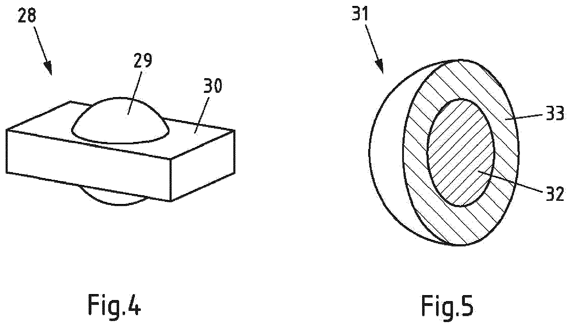

Bedarfsweise kann ein Waschmittelprodukt 28 mit zwei unterschiedlichen Abschnitten 29,30 gedruckt werden, die im Wesentlichen nebeneinander angeordnet sind. Das in der Fig. 4 in Form eines Tabs dargestellte Waschmittelprodukt 28 weist einen inneren kugelförmigen Abschnitt 29 und einen den kugelförmigen inneren Abschnitt 29 teilweise umfassenden, annähernd kubisch ausgebildeten Abschnitt 30 auf. Beide Abschnitte 29,30 sind mit unterschiedlichen Filamenten mit unterschiedlichen Zusammensetzungen gedruckt worden.

Bei dem in der Fig. 5 in Form eines Tabs dargestellten Waschmittelprodukt 31 sind ebenfalls ein innerer Abschnitt 32, gedruckt aus einem Filament einer Zusammensetzung, und ein äußerer Abschnitt 33, gedruckt aus einem Filament einer anderen Zusammensetzung, vorgesehen. Dabei schließt jedoch der äußere Abschnitt 33 den inneren Abschnitt 32 vollständig ein. Es muss sich beim Waschen erst der äußere Abschnitt 33 wenigstens teilweise auflösen, bevor sich der innere Anschnitt 32 aufzulösen beginnen kann. Auf diese Weise werden die Waschmittelkomponenten des inneren Abschnitts 32 zeitverzögert freigegeben. Bedarfsweise kann der äußere Abschnitt 33 noch vollständig von einem ganz äußeren Abschnitt eingeschlossen sein. Der Aufbau des Waschmittelprodukts 31 kann so dem Schichtaufbau einer Zwiebel ähneln.

## Patentansprüche

1. Filament (1,13,24) zum Drucken eines Wasch- oder Reinigungsmittelprodukts (12,28,31), umfassend eine Filamentmatrix und wenigstens eine in der Filamentmatrix eingebundene Wasch- oder Reinigungsmittelkomponente, wobei die Filamentmatrix wenigstens im Wesentlichen durch wenigstens einen wasserlöslichen Kunststoff gebildet wird und wobei die wenigstens eine Wasch- oder Reinigungsmittelkomponente in der Filamentmatrix aufgenommen ist.

2. Filament nach Anspruch 1,
**dadurch gekennzeichnet, dass**
das Filament (1,13,24) einen Durchmesser zwischen 0,1 mm und 5 mm, vorzugsweise zwischen 0,2 mm und 4 mm, insbesondere zwischen 0,3 mm und 3 mm aufweist und/oder dass das Filament (1,13,24) eine Länge von wenigstens 5 m, vorzugsweise wenigstens 10 m, insbesondere wenigstens 50 m, weiter insbesondere wenigstens 100 m, aufweist.

3. Filament nach Anspruch 1 oder 2,
**dadurch gekennzeichnet, dass**
die wenigstens eine Wasch- oder Reinigungsmittelkomponente als disperse Phase in der Filamentmatrix als kontinuierliche Phase ausgenommen ist

4. Filament nach einem der Ansprüche 1 bis 3,
**dadurch gekennzeichnet, dass**
der wenigstens eine wasserlösliche Kunststoff ein thermoplastischer Kunststoff ist und/oder dass wenigstens ein wasserlöslicher Kunststoff ein Polyvinylalkohol, vorzugsweise teilverseifter Polyvinylalkohol mit Anteilen von Polyvinylacetat kleiner 30%, vorzugsweise kleiner 20%, insbesondere kleiner 15%, ein Polyethylenglycol, ein Cetylstearylalkohol und/oder ein Stearylalkohol ist.

5. Filament nach einem der Ansprüche 1 bis 4,
**dadurch gekennzeichnet, dass**
die wenigstens eine Wasch- oder Reinigungsmittelkomponente wenigstens eine Komponente ausgewählt wird aus der Gruppe von Komponenten bestehend aus Tenside, Alkalien, Builder, Vergrauungsinhibatoren, optische Aufheller, Hueing Dyes, Enzyme, Bleichmittel, Photobleichmittel, Photokatalysatoren, Soil-Release-Polymere, Füller, Weichmacher, Duftstoffe, Antimalodor-Stoffe, wie z.B. Zinkrhizinoleat, Farbstoffe, Pflegestoffe, Säuren, Stärke, Isomalt, Zucker, Zellulose, Zellolosederivate, Carboxymethylcellulose, Polyetherimid, Silikonderivate, Polymethylimineund Mischungen davon.

6. Verfahren zur Herstellung eines Filaments nach einem der Ansprüche 1 bis 5,
bei dem der wenigstens eine wasserlösliche Kunstsoff und die wenigstens eine Wasch-oder Reinigungsmittelkomponente, insbesondere in Form von wenigstens einem Granulat (3), in einem Extruder (2) erhitzt, gemeinsam in einem Strang (5) als Extrudat aus wenigstens einer Düse (6) des Extruders (2) ausgestoßen und anschließend abgekühlt werden.

7. Verfahren zur Herstellung eines Filaments (1,13,24) nach Anspruch 6,
bei dem das Extrudat mit wenigstens einem Gas, insbesondere Luft, und/oder mit einer nichtwässrigen Flüssigkeit gekühlt wird und/oder
bei dem das abgekühlte Extrudat abgelängt und/oder aufgewickelt wird.

8. Verfahren zur Herstellung eines Wasch- oder Reinigungsmittelprodukts mit wenigstens einem Filament nach einem der Ansprüche 1 bis 5,
bei dem das wenigstens eine Filament (1,13,24) als Werkstoff für die Herstellung eines Wasch- oder Reinigungsmittelprodukts (12,38,31) in einem 3D-Drucker (14) verwendet wird.

9. Verfahren nach Anspruch 8,
bei dem das Wasch- oder Reinigungsmittelprodukt (12,28,31) in Form eines Tab, eines Streifens, einer Folie, einer Wabenstruktur oder einer Kugel gedruckt wird.

10. Verfahren nach Anspruch 8 oder 9,
bei dem das Wasch- oder Reinigungsmittelprodukt (12,28,31), insbesondere unterschiedliche Abschnitte (29,30,32,33) des Wasch- oder Reinigungsmittelprodukts (12,28,31), aus unterschiedlichen Filamenten (1,13,24) gedruckt wird und,
bei dem, vorzugsweise, wenigstens ein innerer Abschnitt (29,32) des Wasch- oder Reinigungsmittelprodukts (28,31) aus wenigstens einem Filament (1,13,24) und wenigstens ein den inneren Abschnitt (29,32), vorzugsweise vollständig, umschließender äußerer Abschnitt (30,33) aus wenigstens einem anderen Filament (1,13,24) gedruckt wird.

11. Wasch- oder Reinigungsmittelprodukt (12,28,31) hergestellt unter Verwendung eines Filaments (1,13,24) nach einem der Ansprüche 1 bis 5, und/oder eines Verfahrens nach Anspruch 8 bis 10, wobei das Wasch- oder Reinigungsmittelprodukt (12,28,31) die Form eines Streifens, einer Wabenstruktur oder einer Kugel aufweist.

12. Wasch- oder Reinigungsmittelprodukt nach Anspruch 11,
**dadurch gekennzeichnet, dass**
unterschiedliche Abschnitte (29,30,32,33), insbesondere wenigstens ein innerer Abschnitt (29,32) und wenigstens ein den inneren Abschnitt (29,32), vorzugsweise vollständig, umschließender äußerer Abschnitt (30,33), aus wenigstens teilweise unterschiedlichen Filamenten (1,13,24) gedruckt sind.

13. Wasch- oder Reinigungsmittelprodukt nach einem der Ansprüche 11 bis 12,
**dadurch gekennzeichnet, dass**
das Wasch- oder Reinigungsmittelprodukt ein Behältnis aufweist, das mittels 3D-Druck hergestellt worden ist.

## Claims

1. A filament (1, 13, 24) for printing a washing or cleaning agent product (12, 28, 31), comprising a filament matrix and at least one washing or cleaning agent component incorporated in the filament matrix, wherein the filament matrix is formed at least substantially by at least one water-soluble plastics material and wherein the at least one washing or cleaning agent component is absorbed into the filament matrix.

2. The filament according to claim 1,
**characterized in that**
the filament (1, 13, 24) has a diameter of between 0.1 mm and 5 mm, preferably between 0.2 mm and 4 mm, in particular between 0.3 mm and 3 mm, and/or **in that** the filament (1, 13, 24) has a length of at least 5 m, preferably at least 10 m, in particular at least 50 m, more particularly at least 100 m.

3. The filament according to claim 1 or claim 2,
**characterized in that**
the at least one washing or cleaning agent component as a dispersed phase is absorbed into the filament matrix as a continuous phase.

4. The filament according to one of claims 1 to 3,
**characterized in that**
the at least one water-soluble plastics material is a thermoplastic plastics material and/or **in that** at least one water-soluble plastics material is a polyvinyl alcohol, preferably partially saponified polyvinyl alcohol having proportions of polyvinyl acetate of less than 30%, preferably less than 20%, in particular less than 15%, a polyethylene glycol, a cetylstearyl alcohol and/or a stearyl alcohol.

5. The filament according to one of claims 1 to 4,
**characterized in that**
the at least one washing or cleaning agent component is at least one component selected from the group of components consisting of surfactants, alkalis, builders, graying inhibitors, optical brighteners, hueing dyes, enzymes, bleaching agents, photobleaching agents, photocatalysts, soil release polymers, fillers, plasticizers, fragrances, anti-odor substances such as zinc ricinoleates, dyes, nourishing agents, acids, starches, isomalt, sugar, cellulose, cellulose derivatives, carboxymethyl cellulose, polyetherimide, silicone derivatives, polymethylimines and mixtures thereof.

6. A method for producing a filament according to one of claims 1 to 5,
wherein the at least one water-soluble plastics material and the at least one washing or cleaning agent component, in particular in the form of at least one granulate (3), are heated in an extruder (2), discharged from at least one nozzle (6) of the extruder (2) together in one strand (5) as an extrudate and subsequently cooled.

7. The method for producing a filament (1, 13, 24) according to claim 6,
wherein the extrudate is cooled using at least one gas, in particular air, and/or using a non-aqueous liquid, and/or
wherein the cooled extrudate is cut to length or wound up.

8. A method for producing a washing or cleaning agent product using at least one filament according to one of claims 1 to 5,
wherein the at least one filament (1, 13, 24) is used in a 3D printer (14) as a material for the production of a washing or cleaning agent product (12, 38, 31).

9. The method according to claim 8,
wherein the washing or cleaning agent product (12, 28, 31) is printed in the form of a tablet, a strip, a film, a honeycomb structure or a sphere.

10. The method according to claim 8 or claim 9,
wherein the washing or cleaning agent product (12, 28, 31), in particular different portions (29, 30, 32, 33) of the washing or cleaning agent product (12, 28, 31), is printed from different filaments (1, 13, 24), and
wherein, preferably, at least one inner portion (29, 32) of the washing or cleaning agent product (28, 31) is printed from at least one filament (1, 13, 24) and at least one outer portion (30, 33) which encloses the inner portion (29, 32), preferably completely, is printed from at least one other filament (1, 13, 24).

11. A washing or cleaning agent product (12, 28, 31) produced using a filament (1, 13, 24) according to one of claims 1 to 5, and/or a method according to claims 8 to 10, wherein the washing or cleaning agent product (12, 28, 31) is in the shape of a strip, a honeycomb structure or a sphere.

12. The washing or cleaning agent product according to claim 11,
**characterized in that**
different portions (29, 30, 32, 33), in particular at least one inner portion (29, 32) and at least one outer portion (30, 33) which encloses the inner portion (29, 32), preferably completely, are printed from at least partly different filaments (1, 13, 24).

13. The washing or cleaning agent product according to claim 11 or 12,
**characterized in that**
the washing or cleaning agent product comprises a container which has been produced by means of 3D printing.

## Revendications

1. Filament (1, 13, 24) permettant d'imprimer un produit détergent ou nettoyant (12, 28, 31), comprenant une matrice de filaments et au moins un composant de détergent ou de nettoyant incorporé dans la matrice de filaments, dans lequel la matrice de filaments est formée au moins sensiblement par au moins une matière plastique soluble dans l'eau et dans lequel l'au moins un composant de détergent ou de nettoyant est reçu dans la matrice de filaments.

2. Filament selon la revendication 1,
**caractérisé en ce que**
le filament (1, 13, 24) présente un diamètre compris entre 0,1 mm et 5 mm, de préférence entre 0,2 mm et 4 mm, en particulier entre 0,3 mm et 3 mm **et/ou en ce que** le filament (1, 13, 24) présente une longueur d'au moins 5 m, de préférence d'au moins 10 m, en particulier d'au moins 50 m, tout particulièrement d'au moins 100 m.

3. Filament selon la revendication 1 ou 2,
**caractérisé en ce que**
l'au moins un composant de détergent ou de nettoyant est reçu sous forme de phase dispersée dans la matrice de filaments en tant que phase continue.

4. Filament selon l'une des revendications 1 à 3,
**caractérisé en ce que**
l'au moins une matière plastique soluble dans l'eau est une matière plastique thermoplastique **et/ou en ce qu'**au moins une matière plastique soluble dans l'eau est un alcool polyvinylique, de préférence un alcool polyvinylique partiellement saponifié comportant des proportions d'acétate de polyvinyle inférieures à 30 %, de préférence inférieures à 20 %, en particulier inférieures à 15 %, un polyéthylène glycol, un alcool cétylstéarylique et/ou un alcool stéarylique.

5. Filament selon l'une des revendications 1 à 4,
**caractérisé en ce que**
l'au moins un composant de détergent ou de nettoyant est au moins un composant choisi dans le groupe de composants constitué par les tensioactifs, les alcalis, les adjuvants, les inhibiteurs de grisonnement, les azurants optiques, les colorants de nuançage, les enzymes, les agents de blanchiment, les agent de photoblanchiment, les photocatalyseurs, les polymères facilitant le lavage, les charges, les plastifiants, les parfums, les substances anti-malodorantes, comme par exemple le ricinoléate de zinc, les colorants, les produits de soin, les acides, l'amidon, l'isomalt, le sucre, la cellulose, les dérivés de cellulose, le carboxyméthylcellulose, le polyétherimide, les dérivés de silicone, les polyméthylimines et leurs mélanges.

6. Procédé de fabrication d'un filament selon l'une quelconque des revendications 1 à 5,
dans lequel l'au moins une matière plastique soluble dans l'eau et l'au moins un composant de détergent ou de nettoyant sont chauffés dans une extrudeuse (2), en particulier sous forme d'au moins un granulat (3), éjectés conjointement dans un boudin (5) en tant que produit d'extrusion depuis au moins une buse (6) de l'extrudeuse (2), puis refroidis.

7. Procédé de fabrication d'un filament (1, 13, 24) selon la revendication 6,
dans lequel le produit d'extrusion est refroidi par au moins un gaz, en particulier de l'air, et/ou par un liquide non aqueux, et/ou
dans lequel le produit d'extrusion refroidi est coupé à longueur et/ou enroulé.

8. Procédé de fabrication d'un produit de détergent ou de nettoyant comportant au moins un filament selon l'une quelconque des revendications 1 à 5,
dans lequel l'au moins un filament (1, 13, 24) est utilisé en tant que matériau pour la fabrication d'un produit de détergent ou de nettoyant (12, 38, 31) dans une imprimante 3D (14).

9. Procédé selon la revendication 8,
dans lequel le produit de détergent ou de nettoyant (12, 28, 31) est imprimé sous forme d'une tablette, d'une bande, d'une feuille, d'une structure en nid d'abeilles ou d'une sphère.

10. Procédé selon la revendication 8 ou 9,
dans lequel le produit de détergent ou de nettoyant (12, 28, 31), en particulier différentes sections (29, 30, 32, 33) du produit de détergent ou de nettoyant (12, 28, 31), est imprimé à partir de différents filaments (1, 13, 24), et
dans lequel, de préférence, au moins une section intérieure (29, 32) du produit de détergent ou de nettoyant (28, 31) est imprimée à partir d'au moins un filament (1, 13, 24) et au moins une section extérieure (30, 33) entourant de préférence complètement la section intérieure (29, 32) est imprimée à partir d'au moins un autre filament (1, 13, 24).

11. Produit de détergent ou de nettoyant (12, 28, 31) fabriqué à l'aide d'un filament (1, 13, 24) selon l'une quelconque des revendications 1 à 5 et/ou d'un procédé selon les revendications 8 à 10, dans lequel le produit de détergent ou de nettoyant (12, 28, 31) présente la forme d'une bande, d'une structure en nid d'abeilles ou d'une sphère.

12. Produit de détergent ou de nettoyant selon la revendication 11,
**caractérisé en ce que**
différentes sections (29, 30, 32, 33), en particulier au moins une section intérieure (29, 32) et au moins une section extérieure (30, 33) entourant de préférence complètement la section intérieure (29, 32) sont imprimées à partir de filaments (1, 13, 24) au moins partiellement différents.

13. Produit de détergent ou de nettoyant selon l'une quelconque des revendications 11 à 12,
**caractérisé en ce que**
le produit de détergent ou de nettoyant présente un récipient qui a été fabriqué par impression 3D.
